# EUROPEAN PATENT APPLICATION

(11) **EP 1 595 461 A1**
(43) Date of publication of application: **16.11.2005**
(21) Application number: 05008365.8
(22) Date of filing: 18.04.2005
(51) Int. Cl.: A23L 1/314, A23L 1/318

(54) **Cooked ham**

(30) Priority: 10.05.2004 IT MI20040934
(71) Applicant: I Fratelli Emiliani SPA, 43013 Langhirano (PR) (IT)
(72) Inventor: Cardellini, Silvio, 47900 Rimini (RN) (IT)
(74) Representative: Petruzziello, Aldo

(57) **Abstract**

A cooked ham is described that comprises dietary fibre, in order to be suitable for a complete, balanced diet. In particular, dietary fibre replaces sugars, so as to obtain a cooked ham having a low calorie content that is suitable to be consumed by people with problems of diabetes and glycaemia.

## Description

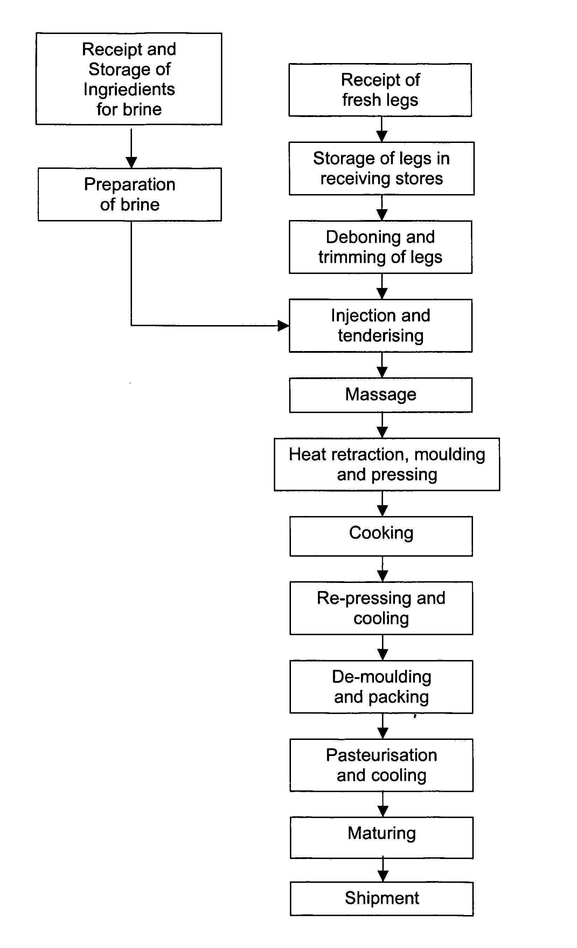

The present invention refers to a cooked ham.
Cooked ham is currently made according to the diagram set out in the appended drawing.

Legs of pork are received and stored in a receiving store. The ingredients for preparation of the brine are then received and stored and the brine is prepared.

### Deboning and trimming

The first step in the production process is removal of the bones. The bones can be removed while maintaining the muscle masses intact or cutting them. This technique, known as "unchopped ham technique" is used for high-quality hams for which no addition of polyphosphates is planned. Trimming is then performed.

### Injection

The meat placed on conveyor belts, is passed beneath the head of a multi-needle injector, which injects brine into the meat. Brine is a water solution in which salt, natural seasonings and other substances necessary to improve the flavour, water retention and cohesion of the different cuts of meat are dissolved.

### Massage

At the end of injection the meat is passed into the massagers. This operation, the duration of which ranges fro 30 to 70 hours, is merely a vigorous prolonged massage. It serves to distribute the brine evenly throughout the entire muscle and to facilitate cohesion of the various muscles and pieces of meat during cooking.

### Shaping and pressing

Once it has been worked and softened, the meat leaving the massagers needs to be shaped. The product is cleaned and prepared for shaping, inserted in a specific heat shrinking bag, then a vacuum is created and the bag is clipped and immersed in boiling water for heat shrinking and then appropriately inserted in a cooking mould leaving hanging a part of the bag which will have the task of collecting the cooking juices.

### Cooking

Cooking takes place in steam ovens, which, thanks to a computerised system, set the operating conditions according to the internal temperature of the muscle. During this stage the organoleptic characteristics are determined, water is lost and the proteins extracted during massage coagulate, allowing the various pieces to stick together. The ham thus definitively takes on the shape of the mould.

### Repressing and cooling

On leaving the ovens, the hams are again subjected to pressing to make the various parts adhere completely to each other. They are then cooled in a refrigerator for about 24-48 hours, during which time the meat settles and the gel formed during cooking is evenly distributed.

### Trimming, pasteurising and packing

Removal from the moulds takes place manually. The hams now need a tidying operation to eliminate irregularities and surface defects. These "flaws" are removed by trimming the shape with a blade. The manipulation required for tidying causes an increase in the surface bacterial load, however, which risks impairing the integrity of the product. To ensure perfect preservability, pasteurisation of the surface is therefore required. One of the ways of achieving this consists in heat treatment of the hams in autoclaves, after they have been placed and vacuum sealed in bags made of polylaminate with aluminium. The hams remain in the autoclaves for 20-30 minutes, after which they are cooled again in refrigerators. After 24 hours, without being removed from the bag again, the ham passes to the final labelling operation and is ready for sale.

In traditional cooked hams the following ingredients are normally used:
- salt: enhances the flavour; performs an important technological action by dissolving some proteins of the muscle, coagulation of which, during cooking, will contribute to ensure the meat is compact and slices well;
- natural seasonings (rosemary, garlic, coriander, juniper, mace): enhance flavour;
- glutamate: enhances flavour;
- polyphosphates and caseinates: possess the ability to bind with water, preventing it from being expelled during cooking;
- nitrates e nitrites: prevent the development of micro-organisms, maintain the pink colour of the meat, and contribute to improving flavour;
- ascorbic acid and sugar: retain water and favour the action of other additives, such as polyphosphates and caseinates.

These ingredients are dissolved in water in the proper percentages to form the brine which is injected into the leg of pork during injection.

The value in the diet of the pork meat of cooked ham is known, as it is rich in noble proteins, highly digestible, provides valin, leucin and isoleucin, that is those branched chain amino acids which were recognised first by hepatologists and now by sports physicians as having particular metabolic advantages. In addition pork meat is an important source of iron (in a bioavailable form, that is easily absorbable, unlike iron from vegetables), zinc and other mineral elements, as well as the wealth of B-group vitamins which completes its already high nutritional value; not to mention the balanced ratio of saturated and unsaturated fatty acids which has now been reached.

However, traditional cooked ham is not a complete food for a balanced diet. Furthermore, the presence of sugar in cooked ham increases its calorie content and does not allow it to be consumed by people who have problems of diet or glycaemia.

A diet is defined as balanced when it has as its premise the relationship between human physiology and nutritional needs. Development in the food industry sector has led to the presence on the market of products that are very appetising but with a high fat and sugar content. Added to this situation is a highly sedentary lifestyle which, especially in large cities, promotes not only weight gain, but also other physical problems.

The object of the present invention is to eliminate the drawbacks of the prior art by providing a cooked ham that is suitable to be used in a balanced diet.

Another object of the present invention is to provide such a cooked ham that ensures a reduced calorie intake, is also suitable for consumers who need particular dietary regimes and at the same time retains its flavour unaltered.

These objects are achieved according to the invention with the characteristics listed in appended independent claim 1.

Advantageous embodiments of the invention are apparent from the dependent claims.

In order to make cooked ham a more complete food, the applicant has surprisingly discovered that it could be enriched and integrated with dietary fibres (DF) so as to provide a product which simultaneously provides the benefits of this type of meat with the benefits of dietary fibre.

After repeated experimental tests, the applicant has discovered that it is possible to include in the brine a percentage of dietary fibres in a range between 0.1 % and 50% with respect to the total weight of the brine, which corresponds to a percentage between 0.5% and 25% of the final edible product. The desire has preferably been to obtain a cooked ham with an optimal fibre value of 2%-4% which corresponds to a percentage of fibre of about 4%-8% in the brine.

Among dietary fibres (DF), plant fibre is preferably used and still more preferably soluble plant fibre, such as for example fructo-oligosaccharides (FOS) or fructans which are dissolved in the water of the brine. Among the fructans, inulin is preferably used.

In the ham according to the invention, sugars, and in particular dextrose and fructose, are partially or totally replaced by dietary fibre. In this manner the amount of sugar contained in the ham can be decreased or eliminated.

It must be considered that dietary fibre plays the same role as sugars. In fact, by retaining water, dietary fibre favours the action of the other additives in the ham ingredients, such as polyphosphates and caseinates.

The fibre content in the ham presents various advantages. Numerous epidemiological studies point out that the spread of many of the most common diseases of western society (for example diverticulosis of the colon, cancer of the colon and rectum, obesity, hyperlipidaemia, diabetes, ischemic heart disease) is inversely correlated to fibre consumption among various populations. Various experimental observations have subsequently confirmed in many cases the indications of epidemiological studies in the different situations mentioned above, as regards the effects found for fibres on glucose and lipid metabolism in particular.

The absence of simple sugars in cooked ham according to the invention brings the advantages of a reduced calorie content with respect to normal cooked ham, and of adaptability to be consumed by diabetics or people who must observe a hypoglycaemic dietary regime.

The fibres and other ingredients of cooked ham according to the invention are preferably free of gluten or wheat derivatives, so the product can also be eaten by consumers who are intolerant to this protein (coeliacs).

In the cooked ham according to the invention milk derivatives, caseinates, lactose, lactulose, etc. are preferably not used, so it is suitable for consumers who are intolerant to these ingredients.

In the cooked ham according to the invention monosodium glutamate, which is an "unsafe" ingredient is preferably not used.

Lastly, all the ingredients (from the raw material to the seasonings) of the ham according to the invention are "free of Genetically Modified Organisms" (GMO).

By way of example, the advantages of dietary fibre in human nutrition are set forth below.

The generic term "dietary fibre" (DF) defines a fraction of foods devoid of nutritional interest, which cannot be classified homogeneously from a chemical point of view. Structurally DFs are composed of carbohydrates, or oxidised carbohydrates, of vegetable origin. In particular, DFs constitute a class of oligomers or polymers of carbohydrates, or oxidised carbohydrates, which resist hydrolysis by digestive enzymes and reach the large intestine intact, without having undergone chemical changes able to influence the intestinal tract in some special functions.

The main effects of dietary fibre in the organism are those of modulating some metabolic processes and absorption of nutrients. The mechanism of action of fibre is directly connected to physico-chemical characteristics, in particular the high capacity to absorb water and organic molecules, to prove digestible and able to form a viscous mass which slows gastric emptying and consequently absorption of nutrients in the small intestine. This contributes, for example, to a slower absorption of glucosides, actually reducing the hyperglycaemic effect of sugars. In the intestine fibre intervenes in regulation of bacterial fermentation, determines an increase in stool volume, reducing consistency with a consequent reduction in pressure on the walls of the colon and in the risk of possible occurrence of diverticulosis. Furthermore, it exerts a detoxifying and anticarcinogenic action, acting as a free radical scavenger, incorporating toxic substances and preventing them from being absorbed. From what is described above, the importance of integrating the diet adequately with suitable amounts of DF is obvious. Dietary fibres can be divided into soluble and insoluble fibres.

Soluble fibres are extensively fermented and are metabolised to produce hydrogen, methane, carbon dioxide and short-chain fatty acids (SCFA). The degree of fermentation also depends upon the chemical structure of the fibre. Two direct effects of this fermentation are well documented: a decrease in intraluminal pH and a proliferation of epithelial cells in the caecum and colon. Vice versa, insoluble DFs, being non-viscous, are not fermentable and can shorten intestinal transit and increase faecal mass but cannot cause significant changes in carbohydrate or lipid metabolism or change intraluminal pH. Insoluble fibres which are not fermented or are only marginally fermented exert above all an accumulation effect which reduces transit time and increases faecal mass. DFs are not digested but can affect digestion, defined as hydrolytic and other processes which take place in the small intestine and are followed by carbohydrate absorption, which leads to a reduced and flattened glycaemic response, and reduced insulin levels. Examples of insoluble DF are, for example, bran and cellulose whilst examples of soluble DF are fructans (inulin) and fructo-oligosaccharides (also known as oligofructose). Part of the functions described above are performed by soluble dietary fibres such as fructo-oligosaccharides (FOS) or fructans, present in a dietary supplement or suitably added as an ingredient of a certain food.

Intake of fructans (which are not hydrolized in the digestive tract, are not absorbed by the intestinal mucosa and pass intact in the colon) causes an increase in production of bifidobacteria, carboxylic acids, in particular lactic acid, with a consequent decrease in pH value which reinforces the barrier effect of intestinal flora which can prevent the growth of potentially pathogenic bacteria, such as *Clostridium* and *Esterichia coli.* Moreover, a decrease in pH favours better absorption of calcium in that its salts are more soluble. FOS and inulin can be considered prebiotic foods and represent a preferential source of carbon for useful bacteria, such as bifidobacteria and lactobacilli, but not for putrefying bacteria such as coli bacilli and clostridia. A regular intake of fructans in the diet helps re-establish the normal intestinal flora after antibiotic therapy, has an effect in relieving constipation and preventing putrefaction fermentation. Dietary ingredients (or dietary supplements) with prebiotic characteristics can perform a more selective regulating action on intestinal microflora with a greater probability of success than prebiotic ones, considering that the latter, in order to reach the colon intact and alive must pass through a large part of the digestive tract, overcoming various barriers of a physical and chemical nature. Furthermore fructans added as ingredients to foods favour biosynthesis of useful products, such as B-group vitamins and folic acid, activate the immune system, have a cholesterol-lowering action and reduce the presence of toxic metabolites. Not least, fructans have a bland sweetening property combined with a reduced calorie content (2 Kcal/g) and a pronounced hypoglycaemic action, making this type of ingredient particularly suitable in the formulation of supplements or dietary foods particularly suitable for persons with diabetes. The functional effects of fructo-oligosaccharides and inulin are summarised in Table 1.

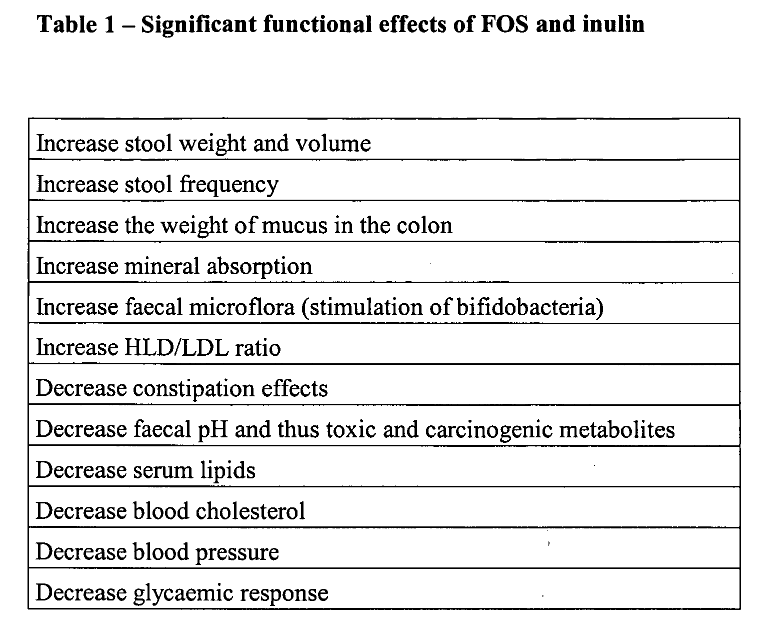

Fructans are carbohydrates consisting of mixtures of fructose oligo- and polysaccharides, with the chemical structure GFn [G = glucose, F = fructose and n = number of fructose monomers connected to each other by means glucoside bonds β(1→2)]. Fructose derivatives with a degree of polymerization (DP) between 3 and 9 are more properly defined as fructo-oligosaccharides (FOS), those with higher DP values as fructans. Fructans are storage carbohydrates stored in the vegetative organs of various plant species including Jerusalem artichokes, chicory, graminaceous plants from grain and forage plants of temperate-cold climates with C₃ photosynthesis. These carbohydrates are also natural components of many foods, such as, for example, artichokes, leeks, onions, garlic, bananas and wheat. Table 1 shows the fructo-oligosaccharide and inulin contents of some vegetable species commonly used in human nutrition.

Their natural presence and mean intake in the human diet, estimated at 3 - 6 grams/day, is widely known. However, data concerning the recommended daily dose of FOS and fructans are discordant. For example, for commercially available dietary supplements, consisting of sachets containing 5 g of fructans, the recommended dosage is 2-3 sachets a day (10-15 g/day).

The fructans available on the market generally consist of inulin. Inulin is a polydispersed mixture of linear fructose chains to which a glucose unit is linked and is obtained commercially from chicory roots by extraction with boiling water, followed by refinement and drying by a spray-dry technique. The degree of polymerization of chicory inulin varies from 3 to 60 monomer units. Also available are inulin fructans from which the fraction with the lowest degree of polymerisation (DP) has been removed, having a DP of about 25. Oligofructose (FOS) is obtained by means of partial hydrolysis with the enzyme fructosidase (inulinase) and is composed of linear GFn chains with n between 2 and 8 (mean value 4). Furthermore FOS are available on the market obtained starting from sucrose through the action of the enzyme fructofuranosidase produced by *Aspergillus niger.* The FOS thus formed contain, besides sucrose, GF2 (1-kestose), GF3 (nystose) e GF4 (fructosyl-nystose) in various proportions.

The use of fructans as dietary integrators and non nutritional added ingredients in functionalised foods dates back to 1984, when they were first used in Japan in the production of "functional foods", that is, foods which are acknowledged to have a beneficial action by virtue of their content of substances that regulate some vital functions.

Fructans are currently used as prebiotic food integrators or as functional ingredients in fortified foods, for example in food integrators or symbiotic foods (simultaneous presence of pre- and probiotics). Taking probiotics at the same time as prebiotics in specific dietary products makes it possible to provide, in addition to the bacteria indispensable for a correct balance of bacterial flora, a specific preferential nutritional substrate for eubiotic bacteria, in fact increasing survival thereof.

## Claims

1. Cooked ham **characterised in that** it comprises dietary fibre.

2. Cooked ham according to claim 1, **characterised in that** the amount of dietary fibre ranges from 0.5% to 25% as percentage weight with respect to the total weight of edible product.

3. Cooked ham according to claim 2, **characterised in that** the amount of dietary fibre is about 2% - 4% as percentage weight with respect to the total weight of edible product.

4. Cooked ham according to any one of the preceding claims, **characterised in that** said dietary fibre comprises a plant fibre.

5. Cooked ham according to claim 4, **characterised in that** said dietary fibre comprises a soluble plant fibre.

6. Cooked ham according to claim 5, **characterised in that** said soluble plant fibre comprises fructo-oligosaccharides (FOS).

7. Cooked ham according to claim 5, **characterised in that** said soluble plant fibre comprises fructans.

8. Cooked ham according to claim 7, **characterised in that** said fructans include inulin.

9. Cooked ham according to any one of the preceding claims, **characterised in that** said dietary fibre is included in the brine that is injected into the leg of pork during injection.

10. Cooked ham according to any one of the preceding claims, **characterised in that** it does not comprise sugars, such as dextrose and fructose.

11. Cooked ham according to any one of the preceding claims, **characterised in that** it does not comprise gluten.

12. Cooked ham according to any one of the preceding claims, **characterised in that** it does not comprise milk derivatives, caseinates, lactose and lactulose.
